# EUROPÄISCHE PATENTSCHRIFT

(11) **EP 0 383 192 B1**
(45) Veröffentlichungstag und Bekanntmachung des Hinweises auf die Patenterteilung: **03.08.1994**
(21) Anmeldenummer: 90102463.8
(22) Anmeldetag: 08.02.1990
(51) Int. Cl.: G02F 1/1337

(54) **Verfahren und Vorrichtung zum Herstellen von Flüssigkristallzellen**
Method and device for manufacturing liquid-crystal cells
Méthode et dispositif de fabrication de cellules à cristal liquide

(30) Priorität: 11.02.1989 DE 3904126
(43) Veröffentlichungstag der Anmeldung: 22.08.1990
(60) Teilanmeldung: 93114971.0
(73) Patentinhaber: Nokia (Deutschland) GmbH, 75175 Pforzheim (DE)
(72) Erfinder: Brosig, Stefan, Dr., D-7000 Stuttgart 1 (DE); Waldmann, Jürgen, Dr., D-7036 Schönaich (DE); Stoitzner, Monika, D-7440 Nürtingen (DE); Barnaba, Martin, D-7000 Stuttgart 50 (DE); Wirsig, Hans-Jörg, D-7014 Kornwestheim (DE); Thaler, Helmut, D-7319 Dettingen (DE)

(56) Entgegenhaltungen:
- FR-A- 2 383 494
- PATENT ABSTRACTS OF JAPAN vol. 12, no. 224 (P-721)25. Juni 1988 & JP A 6318326
- PATENT ABSTRACTS OF JAPAN 27. Mai 1981 & JP A 5629212

## Beschreibung

### Technisches Gebiet

Die Erfindung betrifft ein Verfahren und eine Vorrichtung zum Beschichten von Substratplatten. Bei derartigen Verfahren und mit derartigen Vorrichtungen werden sowohl einzelne Zellenplatten nacheinander und mehrere Zellenplatten gleichzeitig bearbeitet.

### Stand der Technik

Im Rahmen bekannter Herstellverfahren für Substratplatten von Flüssigkristallzellen sind Schleuderverfahren zum Beschichten von Zellplatten bekannt. Dazu wird eine einzelne Zellenplatte oder eine Vielzahl von noch nicht voneinander getrennter Zellenplatten mit einem aufzubringenden Material in flüssiger Form versehen. Dann wird die Platte geschleudert, damit nur ein dünner Flüssigkeitsfilm zurückbleibt, aus dem durch Verdunsten des Lösungsmittels eine feste Schicht entsteht. Diese Schicht kann z. B. eine Orientierungsschicht, eine Isolierschicht oder auch eine Fotolackschicht sein.

Üblicherweise wird dazu die zu beschichtende Zellenplatte zentrisch zur Drehachse des Schleudertellers auf diesem angeordnet, wie es etwa die Schrift JP-A-61-162465 zeigt. Die Folge ist, daß, wenn der Drehteller in Rotation versetzt wird, sich das auf der Oberfläche der Platte aufgebrachte Beschichtungsmaterial in etwa sternförmig über die Plattenoberflächen verteilt und überschüssiges Material abgeschleudert wird.

Aus der Schrift FR-A-2383494 ist ein Verfahren bekannt, bei welchem zur Molekülausrichtung, die bereits mit dem Beschichtungsmaterial vollflächig versehene Platte nicht zentrisch, sondern mit Abstand zur Drehachse des Drehtellers angeordnet wird, wobei der Abstand zwischen der Platte und der Drehachse 5 - 6mal größer ist als die geometrischen Abmessungen der Platte.
Wird eine solche Vorrichtung in Rotation versetzt, richten sich die Molekühle des Beschichtungsmaterials entsprechend der Richtung der wirkenden Zentrifugalkräfte aus. Die Anwendung dieses Verfahrens ist aber - wie diese Schrift selbst einräumt - nur geeignet, sehr kleine Substratplatten (angegeben wird eine Größe 10 x 20 mm) auszubilden. Dies ist wohl darauf zurückzuführen, daß bei größeren Plattenabmessungen der Drehteller unverhältnismäßig groß würde. Ein weiterer Grund, warum das bekannte Verfahren nur auf kleine Plattenabmessungen verwendbar ist, ist der, daß die auch bei kleinen Plattenabmessungen vorhandene, nicht völlig parallele und auf die sternförmige Wirkrichtung der Fliehkräfte zurückzuführende Ausrichtung der Moleküle bei größeren Plattenabmessungen sehr viel stärker sichtbar wird.

Aus der Schrift JP-S-51-105156 ist ein Verfahren zum Ausbilden einer Orientierungsschicht bekannt, welche geeignet ist, den Flüssigkeitsmolekülen einen vorgegebenen Anstellwinkel zu vermitteln. Dazu wird die zu beschichtende Platte an der Innenseite eine Drehtrommel angeordnet, wobei die Platte einen Winkel zur Drehrichtung einnimmt. Sodann wird mittels einer Düsenanordnung, welche etwa im Zentrum der Trommel angeordnet ist, das Beschichtungsmaterial auf die Platte gesprüht, während sich die Trommel dreht. Nach der Beendigung des Sprühvorgangs bilden sich an der Oberfläche der Platte halbkreisförmige Kerne des Beschichtungsmaterials.

Sodann wird die Drehzahl der Trommel erhöht, um das Lösungsmittel aus dem Beschichtungsmaterial zu entfernen. Nach weiterer Erhöhung der Trommeldrehzahl wird erneut Beschichtungsmaterial aufgesprüht, um entsprechende "Anlagerampen" für die Flüssigkristallmolekühle in der gebildeten Schicht auszubilden.

Daher liegt der Erfindung die Aufgabe zugrunde, ein Verfahren anzugeben, welches es erlaubt, Moleküle von Beschichtungsmaterialien für Substratplatten völlig parallel auf der Oberfläche der Platten auszubilden.

Weitere Aufgabe der Erfindung ist es, eine Vorrichtung anzugeben, die es erlaubt, Substratplatten so zu beschichten, daß die Moleküle der auszubildenden Schicht parallel zueinander ausgerichtet sind.

### Darstellung der Erfindung

Die erste Aufgabe wird durch die Vorrichtung gemäß Anspruch 1 gelöst. Die in Anspruch 1 definierte Zuordnung zwischen Drehachse und Platte führt dazu, daß in jedem Punkt der Platte die Schleuderkraft in dieselbe Richtung geht. Die Fließrichtungen des abgeschleuderten Orientierungsschichtmaterials sind dadurch an allen Stellen der Platte zueinander parallel. Die einheitliche Fließrichtung führt zu einer einheitlichen Vorzugsausrichtung der Orientierungsmaterialmoleküle. Diese Vorzugsorientierung wird beim Verdunsten des Lösungsmittels "eingefroren".

Beim herkömmlichen Verfahren standen zu beschichtende Platten rechtwinklig zur Schleuder-Drehachse. Dies führte zu unterschiedlichen Fließrichtungen an unterschiedlichen Punkten der geschleuderten Platten. Die Funktion der Orientierungsschicht war dann nur durch Reiben derselben mit einer weichen Walze, in der Regel einer Samtwalze, erzielbar. Auch bei Verwenden des erfindungsgemäßen Verfahrens läßt sich der Orientierungseffekt durch Reiben der gerichtet aufgebrachten Orientierungsschicht noch weiter verbessern. Er ist dann deutlich stärker als bei einer nach herkömmlichen Verfahren aufgebrachten und dann geriebenen Orientierungsschicht.

Vorzugsweise wird die Platte unter Einhalten der oben genannten Bedingungen so in bezug auf die Schleuder-Drehachse angeordnet, daß diese entweder außerhalb der Substratplatte verläuft oder durch den Rand der Platte geht. Dies hat den Vorteil minimalen Platzbedarfs zum Ausführen des Schleudervorgangs.

Werden Platten so angeordnet, daß sie parallel zur Schleuder-Drehachse stehen, setzen sie dem Drehvorgang einen großen Luftwiderstand entgegen, wenn nicht besondere Maßnahmen ergriffen werden, z. B. im Vakuum geschleudert wird. Mit der erfindungsgemäßen Vorrichtung nach Anspruch 5 läßt sich der Drehwiderstand auch an Luft erheblich herabsetzen, und zwar dadurch, daß die Vorrichtung ein Drehkörper mit kreiszylindrischer Mantelfläche ist, in welchem Drehkörper die zu schleudernde Zelle oder Zellenplatte so angeordnet ist, daß sie nicht über die Berandungen des Drehkörpers übersteht. Vorzugsweise weist die Vorrichtung eine Sprüheinrichtung zum Besprühen mindestens einer in den Drehkörper einsetzbaren Zellenplatte auf.

### Kurze Beschreibung der Figuren

- Fig. 1: Perspektivische Ansicht einer mit Flüssigkristall gefüllten Zelle;
- Fig. 2: eine Perspektivische Ansicht zweier unterschiedlich orientierter Zellenplatten, deren Ebene so angeordnet ist, daß in ihr eine Drehachse liegt; und
- Fig. 3: eine schematische perspektivische Ansicht eines Drehkörpers mit Schlitzen, in die Zellenplatten einsetzbar sind.

### Wege zum Ausführen der Erfindung

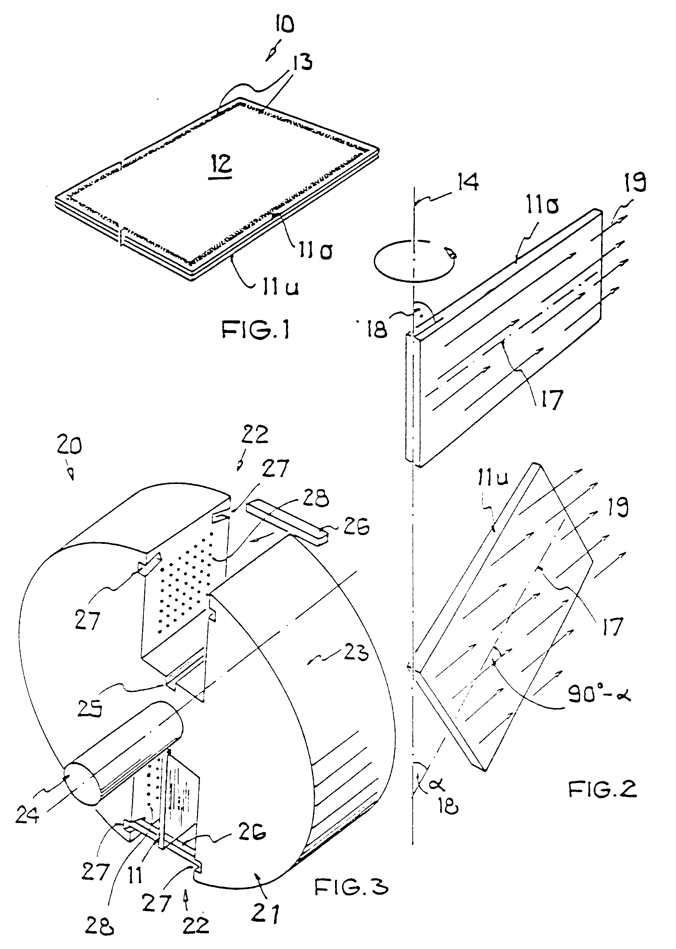

Die in Fig. 1 dargestellte Flüssigkristallzelle 10 enthält zwischen einer oberen Zellenplatte 11.o und einer unteren Zellenplatte 11.u einen Flüssigkristall. Der zwischen den Zellenplatten eingeschlossene Flüssigkristall wird durch einen Kleberrand 13 am Herauslaufen aus dem Bereich zwischen den Zellenplatten gehindert. Der Bereich, in dem der Kleberrand 13 vorhanden ist und ein ins Zelleninnere hin dicht benachbarter Bereich sind bei einem fertigen Display nicht mehr sichtbar. Dieser später beim fertigen Display nicht mehr sichtbare Bereich einer Zelle oder einer einzelnen Zellenplatte wird im folgenden als "nicht sichtbarer Bereich" bezeichnet. Der innerhalb von diesem nicht sichtbaren Bereich liegende Bereich ist der "sichtbare Bereich".

Die Anordnung gemäß Fig. 2 dient zum Aufbringen von (nicht dargestellten) Orientierungsschichten auf Zellenplatten mit Hilfe eines Schleudervorgangs. Die Schleuder-Drehachse 14 verläuft in der Plattenebene von oben nach unten. Vorzugsweise steht bei praktischer Anwendung die Drehachse 14 nicht senkrecht, sondern sie liegt waagerecht. Die Gründe hierfür werden weiter unten näher erläutert. An der (nicht dargestellten) Schleudervorrichtung, zu der die Schleuder-Drehachse 14 gehört, sind zwei Zellenplatten befestigt; die eine sei wiederum eine obere Zellenplatte 11.o und die andere eine untere Zellenplatte 11.u. Beide Zellenplatten liegen in einer Ebene, durch die auch die Schleuder-Drehachse 14 geht. Der Ausrichtwinkel, also der Winkel zwischen Plattenebene und Drehachse ist somit Null. Jedoch ist die untere Zellenplatte 11.u so gegenüber der Schleuder-Drehachse 14 verdreht, daß ihre (strichpunktiert dargestellte) Längsachse 17 unter einem Anstellwinkel 18 der Größe α gegenüber der Drehachse 14 steht. Der Anstellwinkel 18 für die obere Zellenplatte 11.o ist ein rechter Winkel.

Werden die beiden Platten mit so hoher Geschwindigkeit gedreht, daß die Zentrifugalkräfte die Schwerkraft stark überwiegen, wirken auf eine auf die Platten aufgebrachte Flüssigkeitsschicht im wesentlichen nur Kräfte rechtwinklig zur Schleuder-Drehachse 14. Die Richtung dieser Kräfte und entsprechend die Flugrichtung weggeschleuderter Flüssigkeit ist durch zueinander parallele Abschleuderpfeile 19 gekennzeichnet. Bei der oberen Zellenplatte 11.o verlaufen die Abschleuderpfeile 19 parallel zur Längsachse 17, während sie bei der unteren Zellenplatte 11.u unter einem Winkel von 90° - α zur Längsachse 17 stehen. Exakt rechtwinklige Ausrichtung der Abschleuderpfeile 19 zur Schleuder-Drehachse 14 ist dann gegeben, wenn die Schleuder-Drehachse 14 waagerecht liegt. Dann wirkt nämlich die Schwerkraft nicht rechtwinklig zur Zentrifugalkraft, sondern in Richtung derselben.

Durch das Abschleudern einer Flüssigkeitsschicht, die ein Orientierungsmittel enthält, wird nach dem Trocknen des Flüssigkeitsfilmes eine Orientierungsschicht erhalten. Das Trocknen findet, wie beim bekannten Schleuderverfahren, während des Schleuderns statt. Während jedoch bei der herkömmlichen Zuordnung von Drehachse und Platte die Schleuderrichtung und damit die Fließrichtung nicht über die gesamte Platte homogen verteilt ist, ist dies beim Verfahren mit der gegenseitigen Zuordnung von Drehachse und Plattenebene gemäß Fig. 2 der Fall. Die über die ganze Platte homogene Fließrichtung führt zu einer homogenen Vororientierung der Orientierungsschichtmoleküle. Diese bereits molekularhomogen orientierten Schichten weisen bessere Orientierungsschichten auf als herkömmliche Schichten, bei denen die Orientierungswirkung der Schichten alleine durch Reiben erzielt wird. Die Orientierungswirkung kann jedoch auch bei bereits molekularhomogen vororientierten Schichten noch durch Reiben, vorzugsweise mit einer üblichen Samtwalze, verbessert werden.

In Fig. 3 ist ein Ausführungsbeispiel einer konkreten Schleudervorrichtung 20 zum Ausführen des anhand von Fig. 2 erläuterten Vefahrens dargestellt. Wesentliches Bauteil der Schleudervorrichtung 20 ist ein Kreiszylinderrad 21 mit zwei Schlitzen 22, die von nahe der Mitte des Kreiszylinderrades 21 ausgehen und in den kreiszylindrischen Mantel 23 des Rades 21 geöffnet sind. Durch die Mitte des Rades 21 geht eine Lagerwelle 24, die die körperliche Realisierung der Schleuder-Drehachse 14 darstellt.

Jeder der beiden gegenüberliegenden Schlitze 22 weist an seinem Boden eine Nut 25 zum Einsetzen des Randes einer Zellenplatte auf. Eine eingesetzte Zellenplatte 11 ist in dem in der Darstellung gemäß Fig. 3 gerade unten liegenden Schlitz vorhanden. Der in die Nut 25 eingesetzte Rand ist derjenige, der bei der schematischen Darstellung gemäß Fig. 2 der Schleuder-Drehachse 14 am dichtesten benachbart ist. Um die eingesetzte Zellenplatte 11 daran zu hindern, daß sie bei schneller Rotation des Kreiszylinderrades 21 herausgeschleudert wird, ist ihr dem Mantel 23 benachbartes Ende durch Haltestäbe 26 abgestützt. Diese Haltestäbe 26 werden in Vertiefungen 27 in den Schlitzwänden eingeschoben, nachdem eine Zellenplatte 11 in die zugehörige Nut 25 eingesetzt ist. Jeweils in einer Schlitzwand sind Sprühdüsen 28 vorhanden.

Zum Herstellen von Orientierungsschichten wird in jedem der beiden Schlitze 22 eine Zellenplatte 11 befestigt. Dann wird das Kreiszylinderrad 21 in Rotation versetzt und bis auf eine Drehzahl von etwa 2000 U/min beschleunigt. Sobald diese höchste gewünschte Drehzahl erreicht ist, wird eine orientierungsschichtbildende Flüssigkeit aus den Sprühdüsen 28 auf jede der beiden eingesetzten Zellenplatten gesprüht. Der Sprühdruck muß so hoch sein, daß die abgesprühte Flüssigkeit trotz der hohen ablenkenden Zentrifugalkraft die Oberfläche der zugehörigen Zellenplatte erreicht. Bevor das Rad 21 wieder abgebremst wird, wird die hohe Drehzahl noch für einige Sekunden beibehalten. Bis wieder niedrigere Drehzahlen von einigen 100 U/min erreicht werden, ist der aufgebrachte Flüssigkeitsfilm bereits so weit getrocknet, daß sich die durch den beim Abschleudern vorliegenden Fließvorgang vororientierten Orientierungsmoleküle in ihrer Lage nicht mehr wesentlich ändern, d. h. in ihrer Lage "eingefroren" sind. Die Platten stehen dann zum Härten der Schicht zur Verfügung. Der nächste Arbeitsvorgang kann ein herkömmlicher Reibevorgang sein, um die Orientierungswirkung noch weiter zu steigern.

Dem anhand der Fig. 2 und 3 erläuterten Schleudervorgang müssen nicht notwendigerweise einzelne Zellen unterworfen werden. Es kann sich auch um größere Platten handeln, die nach dem genannten Verfahren mit einer Orientierungsschicht mit homogen vorausgerichteten Molekülen versehen werden und erst dann in einzelne Zellenplatten zerteilt werden. In einer Schleudervorrichtung gemäß Fig. 3 können gleichzeitig mehrere Platten bearbeiten werden, z. B. dadurch, daß in mehreren radialen Schlitzen jeweils eine Platte angeordnet wird, oder daß Schlitze, wie sie in Fig. 3 dargestellt sind, relativ breit ausgebildet werden und in jedem Schlitz mehrere Platten angeordnet werden. Im letzteren Fall ist ein Aufsprühen für höchstens zwei Platten pro Schlitz möglich. Werden mehr Platten pro Schlitz eingesetzt, muß das Aufbringen des Flüssigkeitsfilms, der dann abgeschleudert wird, z. B. durch Tauchen erfolgen, und dann muß die Drehzahl so schnell erhöht werden, daß wirkungsvolles Abschleudern und Fließen erfolgt, bevor die aufgebrachte Flüssigkeit zu stark eingetrocknet ist.

Die Vorrichtung gemäß Fig. 3 hat den Vorteil, daß die von der Drehachse abstehenden Platten keinen großen Luftwiderstand erzeugen. Um den Luftwiderstand auch bei hoher Drehzahl möglichst gering zu halten, ist es von Vorteil, die Schlitze 22 möglichst eng zu halten, also besser mit mehreren engen Schlitzen für jeweils eine Platte als mit wenigen breiten Schlitzen für mehrere Platten zu arbeiten. Aber auch bei sehr engen Schlitzen können vor allem während der Drehbeschleunigung noch Luftwirbel in den Schlitzen auftreten. Es ist daher von Vorteil, das orientierungsschichtbildende Material erst dann aufzusprühen, wenn die höchste Drehzahl erreicht ist und demgemäß die dem Kreiszylinderrad 21 direkt benachbarte Luft im wesentlichen dieselbe Drehgeschwindigkeit hat wie das Rad selbst.

Eine Vorrichtung gemäß Fig. 3 mit einem kreiszylindrischen Mantel 23 und Schlitzen 22 läßt sich für alle Herstellvorgänge verwenden, bei denen Zellenplatten oder Flüssigkristallzellen beim Schleudern so angeordnet sein sollen, daß ihre Drehachsen parallel zur Platten- bzw. Zellenebene liegen. Der geringste Platzbedarf besteht dann, wenn die Drehachse der Vorrichtung in der Ebene der Schlitze liegt und die Schlitze bis möglichst dicht zur Achse geführt sind.

Als Material für eine Orientierungsschicht läßt sich jedes beliebige bekannte Material verwenden, z. B. eine Flüssigkeit, wie sie mit Hilfe des Liquicoat-Imidkit von Merck mischbar ist.

Um den Luftwiderstand beim Schleudern möglichst gering zu halten, ist es von Vorteil, die Schlitze 22 oder andere Ausnehmungen zum Einsetzen von Zellen oder Zellenplatten nach dem Einsetzen der Zellen oder Zellenplatten zu verkleiden. Insbesondere beim Verkleiden entlang der Mantelfläche ist aber darauf zu achten, daß dann, wenn Orientierungsschichtmaterial abzuschleudern ist, das Abschleudern nicht in solcher Weise durch die Verkleidung behindert wird, daß es zu ungleichmäßiger Materialverteilung über die Plattenfläche kommt.

## Patentansprüche

1. Verfahren zum Beschichten von Substratplatten (11) mit einer Orientierungsschicht, wobei auf einer der Oberflächen der Substratplatte (11) ein die Orientierungsschicht bildendes Material aufgebracht und in einer Schleuder abgeschleudert wird,
durch folgenden Schritt **gekennzeichnet,**
daß die Substratplatte (11) derart angebracht ist, daß die Schleuder-Drehachse (14) in der Ebene der zu beschichtenden Oberfläche angeordnet ist.

2. Verfahren nach Anspruch 1,
**dadurch gekennzeichnet,**
daß die Schleuder-Drehachse (14) durch einen Randbereich der Substratplatte (11) geht.

3. Verfahren nach Anspruch 1,
**dadurch gekennzeichnet,**
daß die Schleuder-Drehachse (14) außerhalb der Substratplatte (11) liegt.

4. Verfahren nach Anspruch 1,
**dadurch gekennzeichnet,**
daß das Orientierungsmaterial erst aufgebracht wird, wenn die zu beschichtende Substratplatte (11) im wesentlichen ihre Schleuderhöchstdrehzahl erreicht hat.

5. Vorrichtung zur Durchführung des Verfahrens nach Anspruch 1, bestehend aus einem zylindrischen Drehkörper (21) mit kreiszylindrischer Mantelfläche, zu der die Drehachse (14, 24) des Drehkörpers (21) konzentrisch liegt,
**dadurch gekennzeichnet,**
daß der Drehkörper (21) mit radialen Schlitzen (22) versehen ist, in welche mindestens eine Substratplatte (11) so angeordnet ist, daß die Schleuder-Drehachse (14, 24) in der Ebene der zu beschichtenden Oberfläche angeordnet ist und daß kein Teil der Platte (11) über die Berandung des Drehkörpers übersteht.

6. Vorrichtung nach Anspruch 5,
**gekennzeichnet** durch eine Sprüheinrichtung (28) zum Besprühen mindestens einer in den Drehkörper (21) einsetzbaren Substratplatte (11) mit einem Material, mit dem die Platte (11) zu beschichten ist.

## Claims

1. Process for coating substrate sheets (11) with an orientation layer, whereby a material forming the orientation layer is applied to one of the surfaces of the substrate plate (11) and is spun off in a spinner, characterised by the following step in that the substrate sheet (11) is positioned in such a way that the axis of rotation (14) of the spinner is arranged in the plane of the surface to be coated.

2. Process according to Claim 1, characterised in that the axis of rotation (14) of the spinner passes through one edge of the substrate sheet (11).

3. Process according to Claim 1, characterised in that the axis of rotation (14) of the spinner lies outside the substrate sheet (11).

4. Process according to Claim 1, characterised in that the orientation material is only applied when the substrate sheet (11) to be coated has essentially reached its maximum centrifugal speed.

5. Device to implement the process according to Claim 1, consisting of a cylindrical rotating body (21) with regular cylindrical lateral surface with which the axis of rotation (14, 24) of the rotating body (21) is concentric, characterised in that the rotating body (21) is provided with radial slots (22) in which at least one substrate sheet (11) is arranged so that the axis of rotation (14, 24) of the spinner is arranged in the plane of the surface to be coated, and that no part of the sheet (11) projects beyond the edge of the rotating body.

6. Device according to Claim 5, characterised by a spraying device (28) to spray at least one substrate sheet (11) able to be inserted in the rotating body (21) with a material with which the sheet (11) is to be coated.

## Revendications

1. Procédé pour l'enduction de plaques de substrat (11) avec une couche d'orientation, un matériau formant la couche d'orientation étant appliqué sur l'une des surfaces de la plaque de substrat (11) et étant centrifugé dans une tournette, **caractérisé** par le fait que la plaque de substrat (11) est disposée de telle manière que l'axe de rotation (14) de la tournette se trouve dans le plan de la surface à enduire.

2. Procédé selon la revendication 1, **caractérisé** par le fait que l'axe de rotation (14) de la tournette passe par une zone de bordure de la plaque de substrat (11).

3. Procédé selon la revendication 1, **caractérisé** par le fait que l'axe de rotation (14) de la tournette est situé à l'extérieur de la plaque de substrat (11).

4. Procédé selon la revendication 1, **caractérisé** par le fait que le matériau d'orientation n'est appliqué que lorsque la plaque de substrat (11) à enduire a atteint sensiblement sa vitesse de rotation maximale de centrifugation.

5. Dispositif pour la mise en oeuvre du procédé selon la revendication 1, constitué d'un corps rotatif cylindrique (21) présentant une surface d'enveloppe cylindrique circulaire par rapport à laquelle l'axe de rotation (14, 24) du corps rotatif (21) est concentrique, **caractérisé** par le fait que le corps rotatif (21) est pourvu de fentes radiales (22) dans lesquelles au moins une plaque de substrat (11) est disposée de manière
que l'axe de rotation (14, 24) de la tournette se trouve dans le plan de la surface à enduire et à ce qu'aucune partie de la plaque (11) ne dépasse de la bordure du corps rotatif.

6. Dispositif selon la revendication 5, **caractérisé** par un dispositif de pulvérisation (28) pour pulvériser sur au moins une plaque de substrat (11) pouvant être mise en place dans le corps rotatif (21), un matériau avec lequel la plaque (11) doit être enduite.
